Europäisches Patentamt

European Patent Office

Office européen des brevets

(11) Veröffentlichungsnummer : **0 185 960**
**B1**

(12) **EUROPÄISCHE PATENTSCHRIFT**

(45) Veröffentlichungstag der Patentschrift :
15.03.89

(51) Int. Cl.⁴ : **B 29 C 67/14, B 29 C 51/00**

(21) Anmeldenummer : **85115135.7**

(22) Anmeldetag : **29.11.85**

(54) Herstellung von verstärktem Kunststoff.

(30) Priorität : **12.12.84 DE 3445292**

(43) Veröffentlichungstag der Anmeldung :
**02.07.86 Patentblatt 86/27**

(45) Bekanntmachung des Hinweises auf die Patenterteilung :·**15.03.89 Patentblatt 89/11**

(84) Benannte Vertragsstaaten :
**AT BE CH DE FR GB IT LI NL SE**

(56) Entgegenhaltungen :
FR—A— 1 211 053
FR—A— 1 394 271
FR—A— 2 260 261
GB—A— 2 108 558
US—A— 2 827 414
US—A— 2 964 442
US—A— 2 975 503
US—A— 3 127 306
US—A— 3 934 064

(73) Patentinhaber : **BAYER AG**
**Konzernverwaltung RP Patentabteilung**
**D-5090 Leverkusen 1 Bayerwerk (DE)**

(72) Erfinder : **Damsky, Walter, Dipl.-Ing.**
**Höninghausstrasse 36**
**D-4150 Krefeld (DE)**
Erfinder : **Fahnler, Friedrich, Dipl.-Ing.**
**Wimmersweg 60**
**D-4150 Krefeld (DE)**
Erfinder : **Grömping, Franz, Dipl.-Ing.**
**Sebastian-Kneipp-Weg 13**
**D-4150 Krefeld (DE)**
Erfinder : **Sajben, Johannes Otto, Dipl.-Ing.**
**Bethelstrasse 64**
**D-4150 Krefeld (DE)**
Erfinder : **Winchenbach, Helmut, Dipl.-Ing.**
**Elbenweg 11**
**D-4005 Meerbusch (DE)**

## Beschreibung

Die Erfindung betrifft ein Verfahren zur Herstellung von verstärkten Kunststoffteilen, in dem aus Kunststoff und Verstärkungen, die insbesondere aus einem Netzwerk von Fasern bestehen, ein Halbzeug gefertigt wird, aus dem dann ein Formteil hergestellt wird.

Um die Kunststoffe zu verstärken werden Fasern eingebaut.

Bekannt sind Kunststoffteile, die durch Extrusion aus einer Mischung von Kunststoff und Fasern gewonnen werden.

Nachteilig bei diesem Verfahren ist, daß insbesondere spröde Faserwerkstoffe (beispielsweise Glasfasern) stark zerkleinert werden, so daß die die dann vorliegenden kurzen Fasern wegen ihrer geringen Verankerung kaum Zugspannungen über größere Wege übertragen. Auch führt die Strömung innerhalb der Extruder-Düse zu bestimmten Vorzugsrichtungen der Faser. Hierdurch entsteht eine Anisotropie im Kunststoffteil, die unerwünschte richtungsabhängige Festigkeitsschwankungen zur Folge hat. Gleichzeitig neigt ein solches Kunststoffteil zu Verzug.

Weiterhin ist die Kombination von Lang- oder Endlosfasern mit Kunststoffen zu Halbzeugen bekannt. Die Fasern können als Einzelfasern, Faserbündel oder flächige Gebilde in Form von Vliesen, Geweben u.a. vorliegen. Die Herstellung solcher Halbzeuge erfolgt bei thermoplastischen Matrixwerkstoffen durch Tränken der Fasern mit flüssigen Vorprodukten oder mit Schmelze des Thermoplasten, bei duroplastischen Matrixwerkstoffen mit flüssigen Vorprodukten der Duroplaste, z.T. zusammen mit Lösemittel. Faseranteile und Faserlänge sind vorwählbar. Ein solches Verfahren ist z. B. aus der FR-A-2260261, auf welcher der Oberbegriff des Anspruchs 1 basiert, bekannt. Die Weiterverarbeitung solcher Halbzeuge zum Fertigteil erfolgt bei Thermoplasten durch Verformung im thermoplastischen Zustand, wobei die Erwärmung des Halbzeugs außerhalb oder innerhalb der Form erfolgen kann. Duroplastische Vorprodukte werden durch Verpressen unter Druck und Temperatur verarbeitet, wobei das Vorprodukt aushärtet.

Nachteilig bei diesen Verfahren ist, daß die ursprünglich im Halbzeug vorliegende Faseranordnung sich entsprechend der Umformung ändert, so daß die Fasern im Fertigteil nicht dort liegen, wo sie aufgrund der speziellen Eigenschaften optimal ihre Funktion im Fertigteil erfüllen können. Insbesondere leidet hierunter die Festigkeit, der Verformungswiderstand und die Korrosionsbeständigkeit.

Aufgabe der Erfindung ist es, ein Verfahren zur Herstellung eines verstärkten Kunststoffteiles zu finden, welches die vorstehenden Nachteile vermeidet.

Die Aufgabe wird erfindungsgemäß dadurch gelöst, daß durch Vorgaben bei einzelnen Verstärkungen vor dem Einbau in das Halbzeug spätere Änderungen dieser Verstärkungen bei der Verformung gezielt eingestellt werden.

Unter Halbzeug wird in diesem Zusammenhang ein textiles Flächengebilde verstanden, das aus einem Gemisch aus Fasern des Matrixwerkstoffes und aus Fasern des Verstärkungswerkstoffs aufgebaut ist, oder ein kompaktes flächiges Gebilde aus Matrixwerkstoff, in das Verstärkungsfasern eingebettet sind.

Die mit der Erfindung erzielbaren Vorteile bestehen insbesondere darin, daß die Faserverstärkung eine örtlich definierte Situation im Halbzeug und im späteren Fertigteil einnimmt. Dadurch ist eine gezielte Anordnung der Fasern entsprechend der jeweiligen Anforderung im Fertigteil möglich und eine hohe Nutzung der Eigenschaften des Faserwerkstoffs. Bei Beibehaltung der Fertigteil-Eigenschaften läßt sich eine Reduzierung des Faseranteils erreichen. Die Faserverstärkung ist so dehnbar, daß sie bei der Weiterverarbeitung nicht zerstört wird, sondern als einteiliges Ganzes erhalten bleibt. Weiterhin ist von Vorteil, daß die Faserabmessungen (Durchmesser, Länge) exakt vorwählbar, der Faseranteil und die Faserverteilung definiert sind und eine Kombination verschiedener Faserwerkstoffe vorgenommen werden kann.

Als Matrixwerkstoffe finden Thermoplaste oder Duroplaste Verwendung, wahlweise auch in Verbindung mit den üblichen Zusatzstoffen, wie Treibmittel, Farbmittel, Füllstoffen und Verstärkungsstoffen. Ebenso ist die Kombination dieser Stoffe möglich mit dem Vorteil, daß bei unterschiedlicher Beanspruchung der einzelnen Stellen des Fertigteils die Komponenten so angeordnet werden können, daß der eingesetzte Werkstoff auf die Anforderungen abgestimmt ist.

Als Faserwerkstoffe finden synthetische oder natürliche Werkstoffe Verwendung, wie z. B. Glas, Kohlenstoff, Metall, Polyamid, Polyester, Baumwolle usw. Die Fasern können als Einzelfaser, Faserbündel oder Netzwerke (Gewebe, Gestricke) oder deren Kombinationen vorliegen. Auch ist eine Kombination verschiedener Faserwerkstoffe möglich. Hierbei ist von Vorteil, daß die jeweiligen Werkstoffe so angeordnet werden können, daß ihre Eigenschaften (mechanisch, elektrisch, optisch) gut ausnutzbar sind. Die Herstellung der Faserverstärkung ist vor Ort mit herkömmlichen Textilmaschinen möglich, wobei auch kleine Mengen wirtschaftlich herstellbar sind.

In einer besonderen Ausführungsform werden als Vorgabe örtliche Verschiebungen einzelner Verstärkungen vorgenommen.

Durch die gezielte örtliche Vorgabe in bestimmten Bereichen der Verstärkungen bei der Herstellung des Halbzeuges kann die unerwünschte Relativbewegung, die bei der späteren räumlichen Formgebung des Kunststoffteiles zwangsweise auftritt, weitgehend im Voraus kompensiert werden, so daß im fertigen Kunststoffteil die gewünschte Verstärkung dann jeweils an der richtigen Stelle liegt. Durch den Einbau von räumlichen, flächigen oder strangartigen Verstärkungen kann so eine optimale Festigkeit des fertigen Kunststoffteiles erreicht werden.

In einer anderen Ausführungsform werden als Vorgabe bei einzelnen Verstärkungen bestimmte Vorspannungen vorgenommen.

Durch Superpositionierung von Vorspannungskräften, die entgegengesetzt zu den Kräften aus Lasten bzw. zu den herstellungsbedingten Eigenkräften wirken, ist es möglich, Spannungen der Kunststoffteile an kritischen Stellen abzubauen, wodurch insbesondere Risse bzw. Korrosionen vermieden werden.

In einer weiteren Ausführungsform werden als Vorgaben einzelne Verstärkungen vorbehandelt.

Durch eine zusätzliche Behandlung der Verstärkungen während des Einbaus kann die spätere Formgebung des Formteils erleichtert und gesteuert werden. Dabei können physikalische (recken, stauchen, texturieren) oder chemische (erweichen, anlösen) Methoden angewendet werden.

In einer Ausführungsform werden die unter Vorgabe angeordneten Verstärkungen als Netzwerk fixiert.

Die Fixierung der Verstärkungen in der gewünschten Lage kann während des Einbaues durch mechanische Vorrichtungen bzw. chemische Mittel (Leim) erfolgen.

Ein Beispiel der Erfindung ist in der Zeichnung dargestellt und wird im folgenden näher beschrieben.

Es zeigen

Fig 1 Querschnitte einer verstärkten Halbzeugscheibe mit verzerrtem Netzwerk-Ausschnitt A.

Fig 2 Querschnitte eines verstärkten Napfes mit entzerrtem Netzwerk-Ausschnitt B.

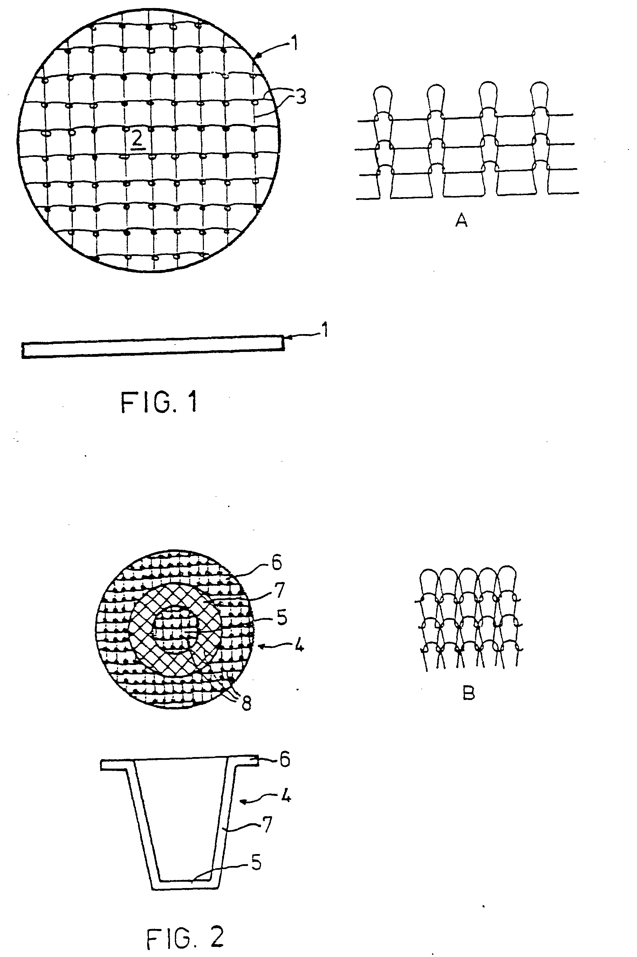

In Fig. 1 ist ein Halbzeug in Form einer runden Scheibe 1 dargestellt, die als Kunststoff einen Matrixwerkstoff 2 und ein unter bestimmten Vorgaben angeordnetes Netzwerk 3 als Verstärkung enthält. Das hier vorliegende Gestrick als Netzwerk ist unter A noch einmal vergrößert herausgezeichnet.

In Fig. 2 ist ein aus der Scheibe 1 durch Umformung entstandener Napf 4 als Fertigteil wiedergegeben. Während der Boden 5 und die Randkrempe 6 keine wesentlichen Änderungen des Netzwerkes 2 aufweisen, besitzen die konische Wandung 7 gestreckte Verstärkungen 8, die nunmehr in Richtung der Spannungstrajektoren verlaufen. Diese Verstärkungen sind in B noch einmal vergrößert dargestellt.

## Patentansprüche

1. Verfahren zur Herstellung von verstärkten Kunststoffteilen, in dem aus Kunststoff und Verstärkungen, die insbesondere aus einem Netzwerk von Fasern bestehen, ein Halbzeug gefertigt wird, aus dem dann ein Formteil geformt wird, dadurch gekennzeichnet, daß durch Vorgaben bei einzelnen Verstärkungen (3) vor dem Einbau in das Halbzeug (1) spätere Änderungen dieser Verstärkungen (3) bei der Verformung gezielt eingestellt werden.

2. Verfahren zur Herstellung von verstärkten Kunststoffteilen nach Anspruch 1, dadurch gekennzeichnet, daß als Vorgabe bestimmte, örtliche Verschiebungen einzelner Verstärkungen (3) vorgenommen werden.

3. Verfahren zur Herstellung von verstärkten Kunststoffteilen nach Ansprüchen 1-2, dadurch gekennzeichnet, daß als Vorgabe bei einzelnen Verstärkungen (3) bestimmte Vorspannungen vorgenommen werden.

4. Verfahren zur Herstellung von verstärkten Kunststoffteilen nach Ansprüchen 1-3, dadurch gekennzeichnet, daß als Vorgaben einzelne Verstärkungen (3) vorbehandelt werden.

5. Verfahren zur Herstellung von verstärkten Kunststoffteilen nach Ansprüchen 1-4, dadurch gekennzeichnet, daß die unter Vorgabe angeordneten Verstärkungen beim Einbau als Netzwerk (3) vorher fixiert sind.

## Claims

1. Process for the production of reinforced plastic components, in which an intermediate component is prepared, consisting of plastic and reinforcements, which in particular consist of a network of fibres, from which subsequently a moulding is made, characterized in that, subsequent changes to these reinforcements (3) during moulding are selectively controlled by preconditioning of the individual reinforcements (3) before the intermediate product (1) is incorporated.

2. Process for the production of reinforced plastic components according to claim 1, characterized in that, as preconditioning, certain local displacements of individual reinforcements (3) are undertaken.

3. Process for the manufacture of reinforced plastic components according to claims 1 to 2, characterized in that, as preconditioning of individual reinforcements (3) certain prestressing is carried out.

4. Process for the production of reinforced plastic components according to claims 1 to 3, characterized in that, as preconditioning, individual reinforcements (3) are preconditioned.

5. Process for production of reinforced plastic components according to claims 1 to 4, characterized in that, the reinforcements ordered under preconditioning are pre-fixed by incorporation as a network (3).

## Revendications

1. Procédé pour la fabrication de pièces renforcées en matière synthétique dans lequel on fabrique, à partir de matière synthétique et de renforcements consistant en particulier en un réseau de fibres, un produit semi-fini à partir duquel on fabrique ensuite une pièce formée, caractérisé en ce que des dispositions préliminaires sont prises au niveau de renforcements individuels (3) avant l'incorporation dans le demi-produit (1) pour introduire de manière judicieuse des modifications ultérieures de ces renforcements (3) au moment du formage.

2. Procédé pour la fabrication de pièces en matière synthétique selon la revendication 1, caractérisé en ce que les dispositions préliminaires sont des déplacements déterminés locaux des renforcements (3) individuels.

3. Procédé pour la fabrication de pièces renforcées en matière synthétique selon les revendications 1-2, caractérisé en ce que les dispositions préliminaires au niveau des renforcements individuels (3) consistent en précontraintes déterminées.

4. Procédé pour la fabrication de pièces renforcées en matière synthétique selon les revendications 1-3, caractérisé en ce que les dispositions préliminaires consistent à appliquer à des renforcements individuels (3) un traitement préliminaire.

5. Procédé pour la fabrication de pièces renforcées en matière synthétique selon les revendications 1-4, caractérisé en ce que les renforcements préparés selon les dispositions préliminaires sont préalablement fixés comme réseau (3) lors de l'incorporation.

FIG. 1

FIG. 2